(19) Europäisches Patentamt
European Patent Office
Office européen des brevets

(11) **EP 4 145 218 B1**

(12) **EUROPEAN PATENT SPECIFICATION**

(45) Date of publication and mention
of the grant of the patent:
**09.07.2025 Bulletin 2025/28**

(21) Application number: **21194929.2**

(22) Date of filing: **03.09.2021**

(51) International Patent Classification (IPC):
*G02F 1/33* (2006.01)  *G02F 1/11* (2006.01)
*G02B 21/00* (2006.01)

(52) Cooperative Patent Classification (CPC):
**G02F 1/33; G02B 21/0064; G02F 1/116**

(54) **OPTICAL FILTER DEVICE**

OPTISCHE FILTERVORRICHTUNG

DISPOSITIF DE FILTRE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.03.2023 Bulletin 2023/10**

(73) Proprietor: **Leica Microsystems CMS GmbH
35578 Wetzlar (DE)**

(72) Inventor: **Krishnamachari, Vishnu Vardhan
64625 Bensheim (DE)**

(74) Representative: **Schaumburg und Partner
Patentanwälte mbB
Mauerkircherstraße 31
81679 München (DE)**

(56) References cited:
**US-A- 5 463 493      US-A1- 2016 209 270
US-A1- 2016 223 882**

**Description**

Technical field

The present invention relates to an optical filter device comprising a transducer tunable with a radio frequency signal for wavelength-dependent light diffraction, wherein the acousto-optic tunable filter has a transducer surface on which the transducer is attached, a light entrance surface configured to receive input light of a predetermined spectral bandwidth within an angular acceptance range, and a light emission surface configured to emit diffracted output light including multiple wavelengths from the spectral bandwidth defining an angular spread among the multiple wavelengths of the output light.

Background

In microscopic and spectroscopic applications, acousto-optic tunable filters are conventionally used for filtering selected wavelengths from light which is generated by broad-band laser sources such as supercontinuum lasers. The optical filter function of such devices can be easily changed by applying a specific radio frequency signal to a piezoelectric transducer which generates an acoustic wave in the filter crystal. The acoustic wave causes refractive index fluctuations in the filter material, these fluctuations acting as a diffraction grating. Thus, the light propagating through the filter material is diffracted in case that the light wavelength matches the diffraction grating. The bandwidth of the output light transmitted through the filter is determined by the specific filter design which may take into account parameters such as the orientation of the filter crystal with respect to the incident light direction and the length of the transducer.

Existing filter designs are excellent in terms of diffraction efficiency, but somewhat at the expense of a significant wavelength-dependent angular spread of the output light emitted by the acousto-optic tunable filter. A wavelength-dependent angular spread may be tolerated to some extent in a number of applications. However, specifically in high resolution imaging applications such as confocal microscopy it is desirable to have almost perfectly collinear light output from the acousto-optic tunable filter over the entire spectral bandwidth.

Document US 2016/223882 A1 discloses an optical filter device according to the preamble of claim 1.

Further, reference is made to documents US 2016/209270 A1 and US 5 463 493 A disclosing optical filter devices which include an acousto-optic tunable filter.

Summary

It is an object to provide an optical filter device and a method enabling an acousto-optic tunable device to emit diffracted output light with a reduced angular spread.

The object is achieved by the subject-matter according to the independent claims. Advantageous embodiments are disclosed in the dependent claims and the following description.

An optical filter device comprises an acousto-optic tunable filter including a transducer tunable with a radio frequency signal for wavelength-dependent light diffraction. The acousto-optic tunable filter has a transducer surface on which the transducer is attached, a light entrance surface configured to receive input light of a predetermined spectral bandwidth within an angular acceptance range, and a light emission surface configured to emit diffracted output light including multiple wavelengths from the spectral bandwidth at exit angles defining an angular spread among the multiple wavelengths of the output light. The acousto-optic tunable filter is formed in accordance with a filter design determining the angular acceptance range with respect to the input light and the angular spread among the multiple wavelengths of the output light. The filter design deviates from a parallel-tangent condition to reduce the angular spread among the multiple wavelengths of the output light while limiting the angular acceptance range with respect to the input light over the spectral bandwidth thereof to collinear light incidence.

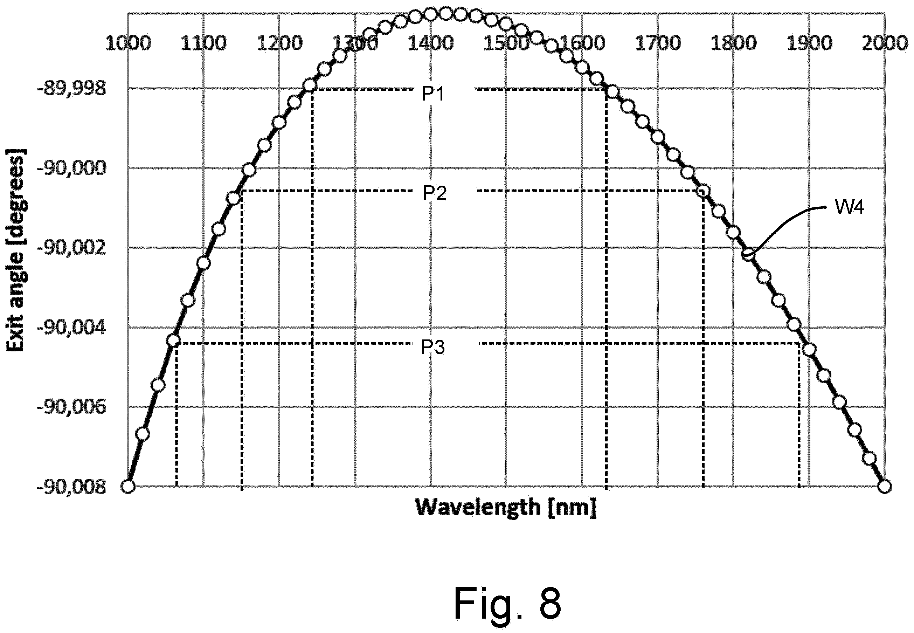

Conventionally, an acousto-optic tunable filter is designed to operate in the so-called parallel-tangent condition. A filter design which is based on the parallel-tangent condition yields an acousto-optic tunable filter with a wide angular acceptance range which corresponds to the field of view (FOV) of the filter. As known in the art, the parallel-tangent condition means that the tangents to the index surfaces or the wave-vector surfaces of the incident and the diffracted polarizations at the points of intersection of the corresponding waves are parallel to each other. In this respect, reference is made e.g. to [1], J.D. Ward et al., "Acousto-optic devices for operation with $2\mu$m fibre lasers", Proc. of SPIE, Vol. 9730, 2015, section 4.1; [2], I. C. Chang, "Noncollinear acousto-optic filter with large angular aperture", Appl. Phys. Lett. 25, 370 (1974); and [3], Application Note ISOMET, "Acousto Opttic Tunable Filters / Basic Theory And Design Considerations, page 8, Figure 8 (https://www.isomet.com/App-Manual_pdf//AOTF-Notes.pdf). Such a conventional filter design satisfying the parallel-tangent condition has the advantage of a wide angular acceptance range. However, the inventor realized that this advantage of a wide angular acceptance range comes at the expense of a relatively large angular spread of the output light over the spectral bandwidth given by the input light, and the inventor further realized that the angular spread may be detrimental in specific applications as for example in confocal microscopy. Surprisingly, the inventor found out that a new filter design deviating from the ubiquitous parallel-tangent condition enables the wavelength-dependent angular spread of the output light to be significantly reduced compared to conventional filter designs that satisfy the parallel-tangent condition. When deviating from the parallel-tangent condition, it must be accepted that the angular acceptance range of the acousto-optic tunable filter with respect to the input light is reduced compared to the conventional filter design. Therefore, the solution presented herein proposes that the angular acceptance range of the acousto-optic tunable filter is essentially limited to a collinear light incidence. Thus, a limitation to collinear light incidence can be easily implemented in a number of possible applications, in particular in confocal microscopy.

Preferably, the filter design is determined in relation to a reference filter design satisfying the parallel-tangent condition so as to reduce both the angular acceptance range with respect to the input light and the angular spread among the multiple wavelengths in comparison with the reference filter design. Thus, it has been found that even a small deviation from the parallel-tangent condition reduces the wavelength-dependent angular spread of the output light significantly.

Preferably, the filter design comprises at least one filter parameter selected from a group including an orientation of the light entrance surface, an orientation of the light emission surface, an orientation of the transducer surface, and a dimension of the transducer. By modifying one or more of the above filter parameters as compared to the conventional filter design a significant reduction of the angular spread among the multiple wavelengths filtered out from the spectral bandwidth of the input light can be achieved.

According to another aspect, an optical filter device is provided which comprises an acousto-optic tunable filter including a transducer tunable with a radio frequency signal for wavelength-dependent light diffraction. The acousto-optic tunable filter has a transducer surface on which the transducer is attached, a light entrance surface configured to receive input light of a predetermined spectral bandwidth within an angular acceptance range, and a light emission surface configured to emit diffracted output light including multiple wavelengths from the spectral bandwidth at exit angles defining an angular spread among the multiple wavelengths of the output light. The angular acceptance range with respect to the input light is limited over the spectral bandwidth thereof to collinear light incidence. The spectral bandwidth is at least 400 nm and at most 1000 nm. The angular spread among the multiple wavelengths of the output light is determined by an angular characteristic which varies in a range from 30 microradians to 400 microradians over the spectral bandwidth.

The angular acceptance range with respect to the input light is limited to to ± 5 milliradians, preferably +/- 1 milliradian relative to a nominal direction of light incidence.

The angular spread among the multiple wavelengths of the output light may be determined by an angular characteristic that has one or more extrema at intermediate wavelengths between the minimum wavelength and the maximum wavelength to provide at least one group of different wavelengths having the same exit angles.

Conventional filter designs usually have angular characteristics which vary monotonically from a minimum wavelength to a maximum wavelength. In contrast, the new filter design proposes an angular characteristic having one or more extrema between the minimum wavelength and the maximum wavelength which enables different wavelengths to have the same exit angle when being emitted from the acousto-optic tunable filter. Thus, the acousto-optic tunable filter is enabled to simultaneously illuminate a specific target region of a sample with multiple wavelengths.

According to a preferred embodiment, the at least one group is a pair of different wavelengths or a triple of different wavelengths. When using two different wavelengths per group at the same exit angle, the acousto-optic tunable filter may be regarded as an achromatic configuration. Further, when using three different wavelengths per group the same exit angle, the acousto-optic tunable filter may be regarded as an apochromatic configuration.

In this respect, it is to be noted that achromatic and apochromatic designs are known in the field of optical lenses. In optical lenses, due to the dependence of the refractive index of the glass medium on the incident wavelength, the effective focal length is not the same for all wavelengths. In other words, chromatic aberration occurs. To correct for this chromatic aberration, achromatic and apochromatic lens configurations use two and three types of glass materials with different refractive indices, respectively. While the new filter design also achieves such an achromatic or apochromatic effect, it is not necessary to combine multiple filter materials to achieve this effect. Rather, the effect is achieved in the new filter design due to the wavelength-dependent refractive index and the wavelength-dependent birefringence of the filter crystal material which may be tellurium dioxide.

According to a preferred embodiment, the optical filter device comprises a control unit which is configured to tune the acousto-optic tunable filter for illuminating the sample with the at least one group of different wavelengths at the same exit angle.

Preferably, the control unit is configured to select the at least one group of different wavelengths based on the angular characteristic in response to a user input. Thus, a user is enabled to freely select suitable wavelengths which are collinearly emitted from the acousto-optic tunable filter.

The control unit may further be configured to tune the acousto-optic tunable filter simultaneously to the different wavelengths of the at least one group. Thus, it is ensured that the different wavelengths of the output light are irradiated at the same time onto the sample.

Preferably, the control unit is configured to select the at least one group of different wavelengths based on the angular characteristic in response to a user input. Thus, a user is enabled to freely select suitable wavelengths which are collinearly emitted from the acousto-optic tunable filter.

In a preferred embodiment, the optical filter device comprises a first light deflecting element which is configured to deflect the at least one group of different wavelengths output by the acousto-optic tunable filter into a predetermined target direction. Thus, all wavelength groups are enabled to propagate along the same direction towards the sample despite the fact that these groups are emitted from the acousto-optic tunable filter at the different exit angles.

Preferably, the minimum wavelength and the maximum wavelength define an operating range in which the acousto-optic tunable filter is operated for tuning the wavelengths of the output light.

According to a preferred embodiment, the light supply unit may be provided which is configured to irradiate the input light over the spectral bandwidth collinearly onto the light entrance surface of the acousto-optic tunable filter. The light supply unit may comprise one or more supercontinuum laser sources, for example white light lasers, without being limited thereto.

According to another aspect, a microscope is provided which comprises an optical filter device as described above. Preferably, the microscope is configured as a confocal microscope.

According to another aspect, a method for manufacturing an acousto-optic tunable filter is provided. The method comprises the steps of creating a filter design determining the angular acceptance range with respect to the input light and the angular spread among the multiple wavelengths of the output light, wherein the filter design deviates from the parallel-tangent condition to reduce the angular spread among the multiple wavelengths of the output light while limiting the angular acceptance range with respect to the input light over the spectral bandwidth thereof to collinear light incidence, and forming the acousto-optic tunable filter in accordance with the filter design.

Short Description of the Figures

Hereinafter, specific embodiments are described referring to the drawings, wherein:

Fig. 1 is a schematic view of a microscope comprising an optical filter device which includes an acousto-optic tunable filter according to an embodiment,

Fig. 2 is a schematic view of the acousto-optic tunable filter illustrating an operating principle to emit output light by wavelength-dependent light diffraction,

Fig. 3 is a schematic view of an acousto-optic tunable filter according to a comparative example illustrating a relatively large angular spread which conventionally occurs among multiple wavelengths of the output light,

Fig. 4 is a graph showing an angular characteristic which determines an angular spread of the output light in the comparative example,

Fig. 5 is a schematic view illustrating a lateral focus shift which occurs in the comparative example due to the large angular spread of the output light,

Fig. 6 is a graph showing an angular characteristic reducing a wavelength-dependent angular spread of the output light according to an embodiment,

Fig. 7 is a graph showing an angular characteristic reducing the wavelength-dependent angular spread of the output light according to another embodiment,

Fig. 8 is a graph showing an angular characteristic reducing the wavelength-dependent angular spread of the output light according to another embodiment,

Fig. 9 is a schematic view of the acousto-optic tunable filter having an angular characteristic according to one of the embodiments shown in Figures 6 to 8 providing pairs of different wavelengths having the same exit angle,

Fig. 10 is a graph showing an angular characteristic according to another embodiment reducing the wavelength-dependent angular spread of the output light,

Fig. 11 is a schematic view of the acousto-optic tunable filter having an angular characteristic according to the embodiment shown in Figure 10 providing triples of different wavelengths having the same exit angle,

Fig. 12 is a graph showing the angular characteristics according to the embodiment of Figures 4, 6, 7, 8, and 10 in combination,

Fig. 13 is a graph showing an angular characteristic according to an embodiment in which a suitable difference between two wavelengths is to be selected,

Fig. 14 is a graph showing a wavenumber associated with a vibrational mode as a function of the exit angle, and

Fig. 15    is a graph showing an angular characteristic according to an embodiment in which three wavelengths at same exit angle are to be selected.

### Detailed Description

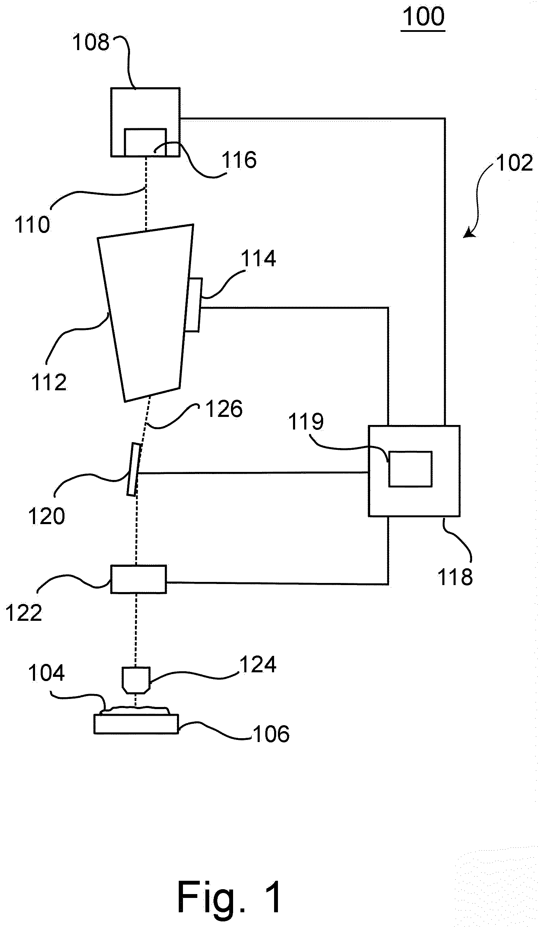

Figure 1 shows a microscope 100 which includes an optical filter device 102 according to an embodiment. The microscope 100 may be configured as a confocal microscope which is used to acquire an image of a sample 104 which is arranged on a microscope stage 106. It is to be noted that Fig. 1 shows only those components which may help to understand the technical teaching disclosed herein. In particular, Figure 1 focuses on those components which are used to illuminate the sample 104. Needless to say that the microscope 100 may comprise additional components, in particular those components which are required for image acquisition as for example one or more image sensors / light sensors which are not shown in Figure 1.

The optical filter device 102 of the microscope 100 comprises a light supply unit 108 which is configured to generate input light 110 which is directed to an acousto-optic tunable filter (AOTF) 112 which includes a tunable piezoelectric transducer 114. According to the embodiment shown in Figure 1, the light supply unit 108 may comprise one or more broadband laser sources, for example a supercontinuum laser source 116 which is configured to emit the input light 110 with a broad spectral bandwidth. Just as an example, it may be assumed that the light supply unit 108 is capable of providing a spectral bandwidth which ranges from 400 nm to 2000 nm.

The optical filter device 102 further comprises a control unit 118 including a memory 119 in which various control data may be stored. The control unit 118 can be used to control an overall operation of the optical filter device 102. Specifically, the controller 118 may control the light supply unit 108 and the piezoelectric transducer 114 of the AOTF 112. In addition, the control unit 118 may control first and second light deflection elements 120, 122 to deflect output light 126 emitted from the AOTF 112 as described in more detail below. For actuating the light deflecting elements 120, 122 suitable drive means such as motors may be provided.

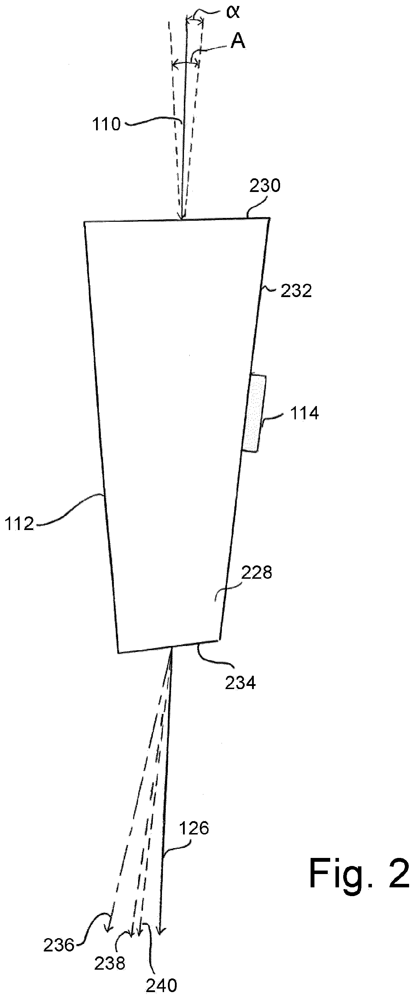

According to the embodiment shown in Figure 1, the optical filter device 102 serves to spectrally filter the illumination light which is irradiated onto the sample 104 through an illumination objective 124. The illumination light is formed from the output light 126 which is emitted from the AOTF 112 and directed by means of the light deflecting elements 120, 122 towards the sample 104. In the present embodiment, the AOTF 112 enables filtering of desired spectral components from the broad spectral bandwidth of the input light 110 provided by the light supply unit 108. The operating principle for filtering the input light 110 based on wavelength-dependent light diffraction is illustrated in Figure 2 showing the AOTF 112 alone.

The AOTF 112 comprises a filter body 228 formed from a crystal such as tellurium dioxide ($TeO_2$) without being limited thereto. The filter body 228 has a light entrance surface 230 which is configured to receive the input light 110 within an angular acceptance range A. In Figure 2, an arrow designated with reference sign 110 indicates a nominal direction of light incidence. The angular acceptance range A is defined by an angular tolerance $\pm \alpha$ by which the light incidence is allowed to deviate from the aforementioned nominal direction. The specific value of the angular tolerance $\alpha$ is predetermined in accordance with the specific filter design based on which the AOTF 112 is manufactured. As explained below in more detail, according to the embodiment, the angular acceptance range A is limited to collinear light incidence over the entire spectral bandwidth of the input light 110. Accordingly, it is to be noted that the width of the angular acceptance range A (and correspondingly the angle tolerance $\alpha$) is shown exaggeratedly large in Figure 2. More specifically, the angular acceptance range A with respect to the input light 110 may be limited over the entire spectral bandwidth to $\pm \alpha$ = +/-5 milliradians, preferably +/-1 milliradian relative to the nominal direction of light incidence.

The filter body 228 of the AOTF 112 comprises a transducer surface 232 on which the piezoelectric transducer 114 is attached. Further, the filter body 228 has a light emission surface 234 through which the spectrally filtered output light 126 is emitted from the AOTF 112.

The optical filter function of the AOTF 112 can be easily changed by applying a suitable radio frequency (RF) signal to the transducer 114. For this purpose, the control unit 118 shown in Figure 1 may determine the RF signal e.g. in response to a user input and apply the RF signal to the transducer 114. It is to be noted that the control unit 118 may simultaneously apply a plurality of RF signals to the transducer 114 so that the output light 126 comprises multiple wavelengths from the spectral bandwidth of the input light 110, each wavelength being assigned to one of the RF frequency signals applied to the transducer 114. For the sake of simplicity, it is assumed that Figure 2 illustrates a case where only one wavelength is selected from the broad spectral bandwidth provided by the input light 110.

In principle, the AOTF 112 operates as known in the art for spectrally filtering the input light 110. Thus, upon receiving the RF signal from the control unit 118, the transducer 114 of the AOTF 112 generates an acoustic wave which propagates through the filter body 228. When propagating through the filter body 228, the acoustic wave causes fluctuations of the refractive index in the crystal material of the filter body 228, these fluctuations acting as a diffraction grating with respect to the light transmitting the filter body 228. By tuning the RF signal and thus also the frequency of the acoustic wave, a desired wavelength can be filtered out from the spectral bandwidth of the input light 110 through acousto-optical diffraction.

In the example of Figure 2 it is assumed that the input light 110 entering the filter body 228 through the light entrance surface 230 is unpolarized light. It is further assumed that the output light 126 which is used for illuminating the sample 104 is given by a diffracted beam of first order having a specific polarization, e.g. horizontal (or vertical) polarization. In this case, a light beam 236 shown in Figure 2 represents a diffracted beam of first order having the other polarization, i.e. vertical (or horizontal) polarization. Further, light beams to 238, 240 represent light beams which are not diffracted, i.e. beams of zero order having vertical and horizontal polarizations, respectively. As can be seen in Figure 2, the light beams 126, 236, 238, 240 are emitted from the AOTF 112 at different exit angles so that they are spatially separated from each other. Since only the output light 126 is used for illumination, the light beams 236, 238, 240 may be absorbed by suitable means such as a light trap (not shown).

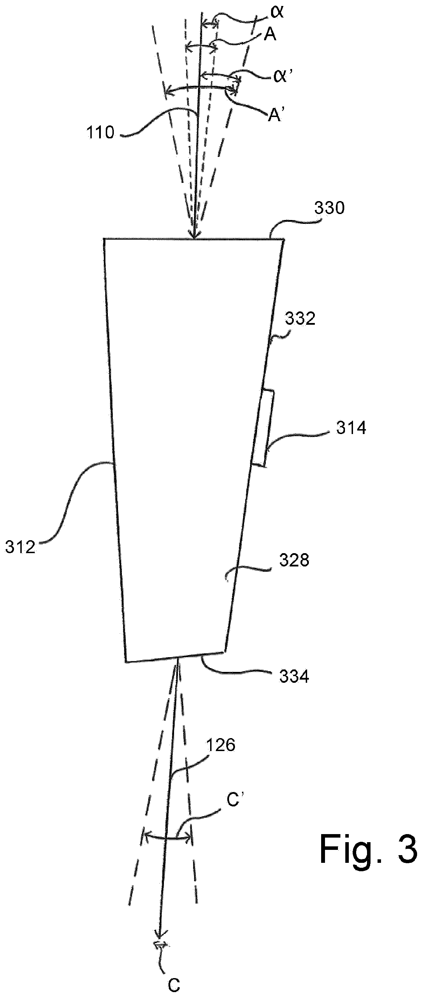

Before continuing the description of the embodiments disclosed herein, a comparative example is explained in the following with reference to Figures 3 to 5.

When designing AOTF crystals, conventionally the parallel-tangent condition is applied. In AOTF crystals that have been designed to satisfy the parallel-tangent condition, the tangents on the wave-vector surfaces of the incident and the diffracted polarizations at the points of intersection of the corresponding waves are parallel to each other. AOTF crystals satisfying the parallel-tangent condition are very tolerant to variations in the angle of light incidence. This ensures that the maximum diffraction efficiency does not change significantly even if the angle of the incident light beam with respect to the light entrance surface is different from a nominal or design value. In other words, if the parallel-tangent condition is satisfied, the angular acceptance range is relatively large.

Figure 3 shows a comparative example with an AOTF 312. As in the embodiment, the AOTF 312 according to the comparative example comprises a filter body 328 which may be formed from a TeO$_2$ crystal or any other suitable material. Furthermore, as in the embodiment, the AOTF 312 comprises a light entrance surface 330, a transducer surface 332 on which a piezoelectric transducer 314 is attached, and a light emitting surface 334. However, in contrast to the embodiment, the AOTF 312 according to the comparative example is manufactured based on a conventional filter design which satisfies the parallel-tangent condition. Consequently, an angular acceptance range A' (corresponding to an angular tolerance $\alpha$') is relatively large.

However, Figure 3 also shows, as realized by the inventor, that satisfying the parallel-tangent condition in order to achieve the relatively large angular acceptance range A' comes at the expense of a relatively large angular spread C' among the multiple wavelengths of the output light 126 over the entire spectral bandwidth which is provided by the input light 110. The aforementioned angular spread C' is determined by the different exit angles at which the multiple wavelengths of the output light 126 are emitted from the light emission surface 334 of the AOTF 312. The greater the spectral bandwidth of the input light 110, the greater the angular spread C' of the output light 126, provided that the entire spectral bandwidth shall be usable. As explained below in more detail, deviating from the conventional filter design satisfying the parallel-tangent condition allows to reduce the angular spread of the output light 126 (indicated as C in Figure 3) at the expense of limiting the angular acceptance range with respect to the input light 110 (indicated as A and $\alpha$ in Figure 3). Again, the chromatic spreads C, C' and the widths of the angular acceptance ranges A, A' are shown exaggeratedly large in Figure 3 to qualitatively illustrate the proportions between the comparative example and the embodiment. In particular, Figure 3 serves to illustrate that the chromatic spread C is significantly reduced in relation the comparative example which satisfies the parallel-tangent condition.

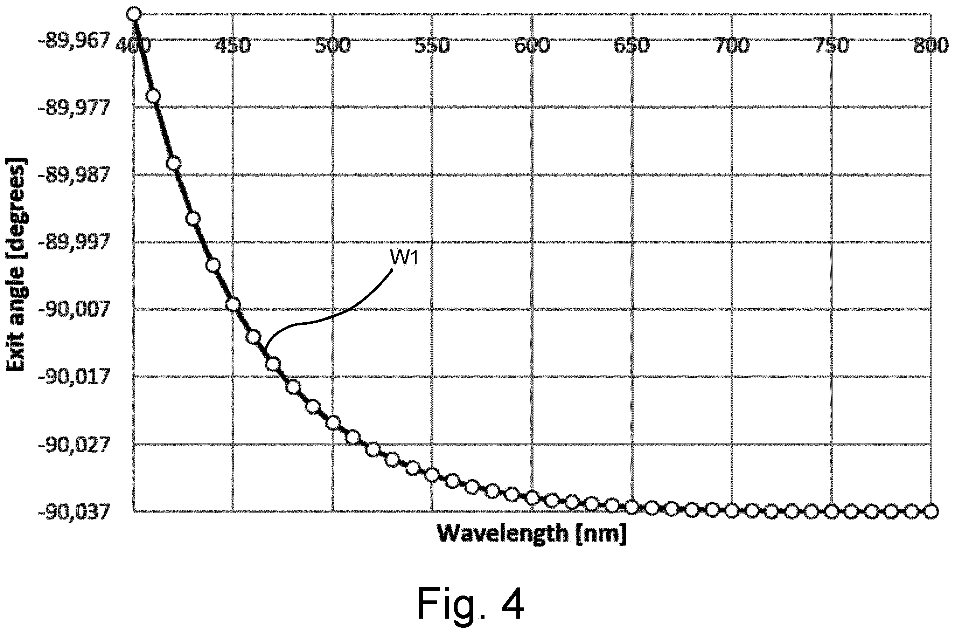

For a commercially available AOTF operating e.g. in a range of 400 nm to 800 nm, the difference in the exit angles between 400 nm and 800 nm is about 1300 microradians as shown in Figure 4. Figure 4 is a graph illustrating an angular characteristic W1 of the AOTF 312 that determines the angular spread C' among the multiple wavelengths of the output light 126. The angular characteristic W1 in Figure 4 indicates how the exit angles of the output light 126 vary depending on the wavelengths. In Figure 4, the abscissa of the graph designates the wavelengths of the output light 128 while the ordinate of the graph designates the exit angles of the output light 126 relative to the light emission surface 334. (The absolute values of the exit angles are not essential in this context. It is rather the relative values that matter.) The graph of Figure 4 shows that the exit angles of the output light 126 monotonically vary by a relatively large amount between a minimum wavelength and a maximum wavelength.

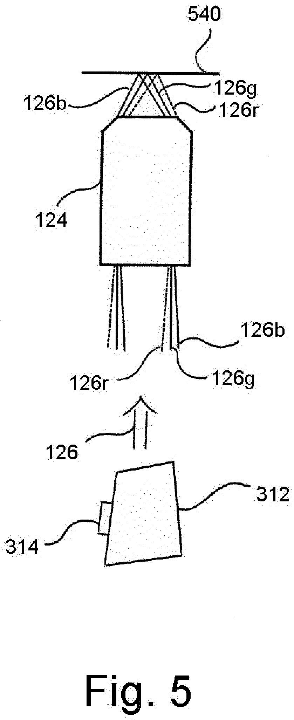

A large angular spread C' may cause significant problems in applications where the light emission from the AOTF is desired to be as collinear as possible over the entire spectral bandwidth, such as in confocal microscopy. Figure 5 illustrates an example in which the output light 126 emitted from the AOTF 312 includes a red spectral component 126r, a green spectral component 126g, and a blue spectral component 126b. It shall be assumed that the different spectral components 126r, 126g, 126b are directed into the illumination objective 124 having an exemplary magnification of 40. Considering an angular spread of 1300 microradians in this example, a lateral focal shift of 322 nm is caused in a focal plane 540 of the illumination objective 124. Such a lateral focus shift is close to the size of a typical point-spread function (PSF). As a result, image quality may deteriorate in case of a large angular spread.

In order to solve the aforementioned problem, the embodiments disclosed herein are based on a filter design which deviates from the parallel-tangent condition to some extent. For this purpose, the filter design may be determined in relation to a reference design satisfying the parallel-tangent condition to reduce both the angular acceptance range A with respect to the input light 110 and the angular spread C among the multiple wavelengths of the output light 126 when compared with the reference filter design. Generally, the filter design based on which the AOTFs according to the present embodiments are manufactured may comprise at least one filter parameter selected from a group including an orientation of the light entrance surface 230, an orientation of the light emission surface 234, an orientation of the transducer surface 232, and a dimension of the transducer 114.

More specifically, the filter design applied to the embodiments may provide for a reorientation of internal crystal angles slightly away from the parallel-tangent condition. For instance, by varying the angle of light incidence by 1°, the angle of the light entrance surface 230 by 1° and the angle of the transducer surface 232 by less than 0.1° from the respective ideal values of the reference filter design satisfying the parallel-tangent condition, an AOTF design can be achieved which has a significantly smaller angular spread C among the multiple wavelengths of the output light 126 as compared to the reference filter design. Surprisingly, small variations in the above filter parameters have been found to produce significant reductions of the angular spread C. As already mentioned above, reducing the angular spread C while violating the parallel-tangent condition comes at the expense of limiting the angular acceptance range A with respect to the input light 110. However, in applications such as confocal microscopy it is possible to generate the input light 110 over the entire spectral bandwidth in a collinear manner so that there is no disadvantage when limiting the angular acceptance range A of the AOTF.

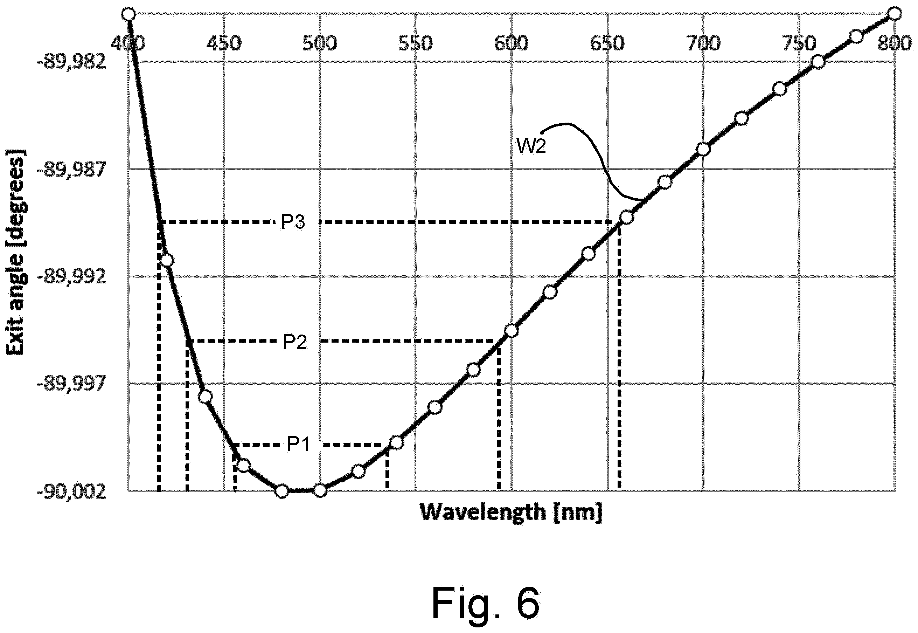

Hereinafter, with reference to Figures 6 to 8, embodiments are disclosed having angular characteristics which enable the angular spread C of the output light 126 to be significantly reduced compared to a conventional filter design.

Figure 6 is a graph showing an angular characteristic W2 according to an embodiment which is to be compared with the angular characteristic W1 of the conventional filter design shown in Figure 4. As in Figure 4, the angular characteristic W2 according to the embodiment of Figure 6 varies from a minimum wavelength of 400 nm to a maximum wavelength of 800 nm. The entire variation of the angular characteristic W2 from 400 nm to 800 nm is less than 400 microradians which is a reduction in the angular spread by almost a factor of 4 compared to the conventional filter design of Figure 4. The angular characteristic W2 has an extremum (minimum) at an intermediate wavelength which is in a range between 450 nm to 550 nm. In other words, while the angular characteristic W1 of the conventional filter design shown in Figure 4 monotonically varies from the minimum wavelength to the maximum wavelength, the angular characteristic W2 according to the embodiment shown in Figure 6 at first decreases from the minimum wavelength to the intermediate wavelength where the extremum of the characteristic W2 is located and then increases from the intermediate wavelength to the maximum wavelength. Accordingly, the new filter design deviates from a monotonically varying angular characteristic enabling the angular spread C to be reduced.

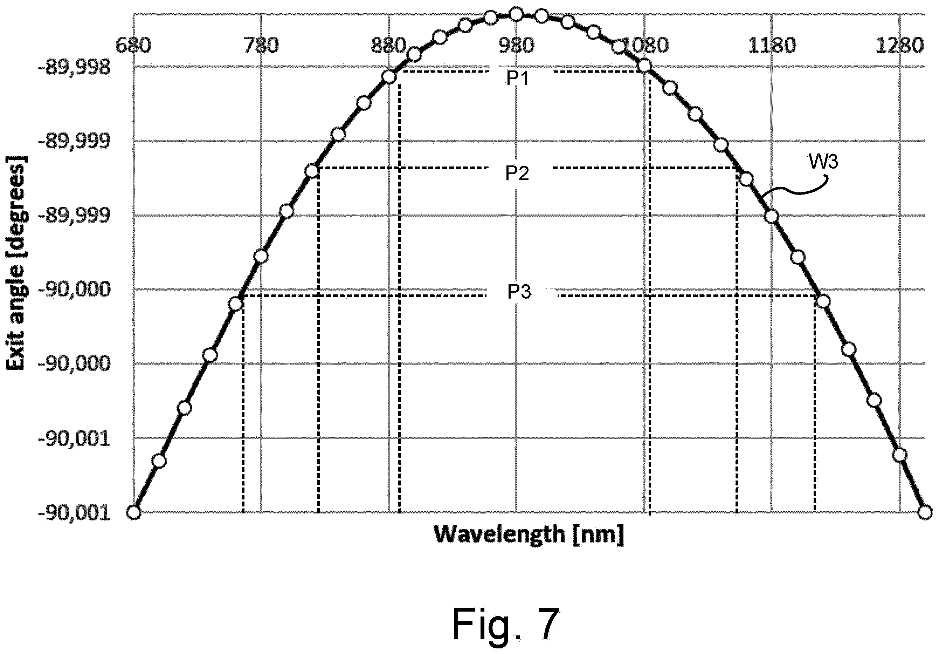

Figure 7 is a graph showing an angular characteristic W3 according to another embodiment. The angular characteristic W3 varies from a minimum wavelength of 680 nm to a maximum wavelength of 1300 nm. The entire variation of the angular characteristic W3 is less than 60 microradians. The angular characteristic W3 has an extremum (maximum) at an intermediate wavelength which is in a range between 880 nm to 1080 nm. Accordingly, while the angular characteristic W1 of the conventional filter design shown in Figure 4 monotonically varies from the minimum wavelength to the maximum wavelength, the angular characteristic W3 at first increases from the minimum wavelength to the intermediate wavelength where the extremum of the characteristic W3 is located and then decreases from the intermediate wavelength to the maximum wavelength. Accordingly, the new filter design deviates from a monotonically varying angular characteristic which enables the angular spread C to be reduced.

Figure 8 is a graph showing an angular characteristic W4 according to another embodiment. The angular characteristic W4 varies from a minimum wavelength of 1000 nm to a maximum wavelength of 2000 nm. The entire variation of the angular characteristic W3 is less than 210 microradians. The angular characteristic W4 has an extremum (maximum) at an intermediate wavelength which is in a range between 1300 nm to 1500 nm. Accordingly, while the angular characteristic W1 of the conventional filter design shown in Figure 4 monotonically varies from the minimum wavelength to the maximum wavelength, the angular characteristic W3 at first increases from the minimum wavelength to the intermediate wavelength where the extremum of the characteristic W3 is located and then decreases from the intermediate wavelength to the maximum wavelength. Accordingly, the new filter design deviates from a monotonically varying angular characteristic which enables the angular spread C to be reduced.

As explained above, each of the angular characteristics W2 to W4 shown in Figures 6 to 8 have an extremum at an intermediate wavelength within a wavelength range where the AOTF 112 is operated. Therefore, each angular characteristic W2 to W4 provides a plurality of pairs P1, P2, P3, each pair including two wavelengths having the same exit angle when being emitted from the AOTF 112 as indicated in Figures 6 to 8 by dashed lines, respectively.

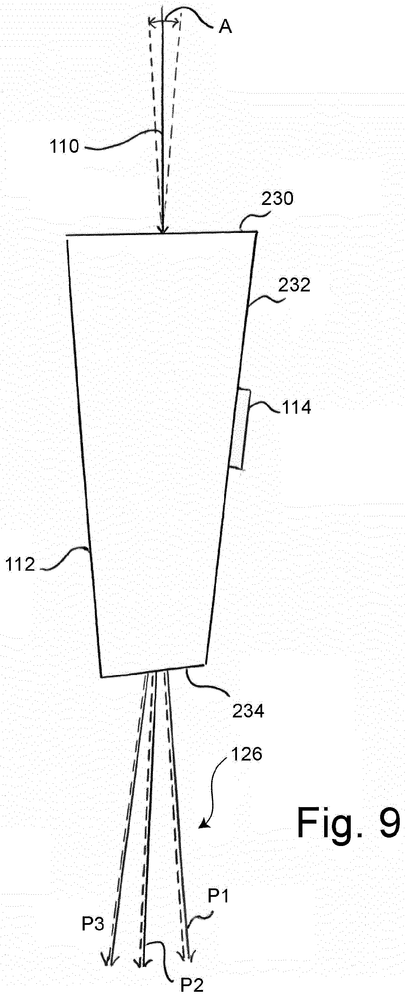

Figure 9 shows the AOTF 112 when designed to implement one of the angular characteristics illustrated in Figures 6 to 8. As can be seen in Figure 9, each group P1, P2 and P3 includes two wavelengths illustrated as solid and dashed lines, respectively, which are emitted from the AOTF 112 at the same exit angle. In other words, while there is still some angular spread among the multiple wavelengths of the output light 126 (albeit significantly reduced compared to the conventional filter design), the angular characteristic enables the wavelengths of each group P1, P2, P3 to exit from the AOTF 112 in a perfectly collinear manner.

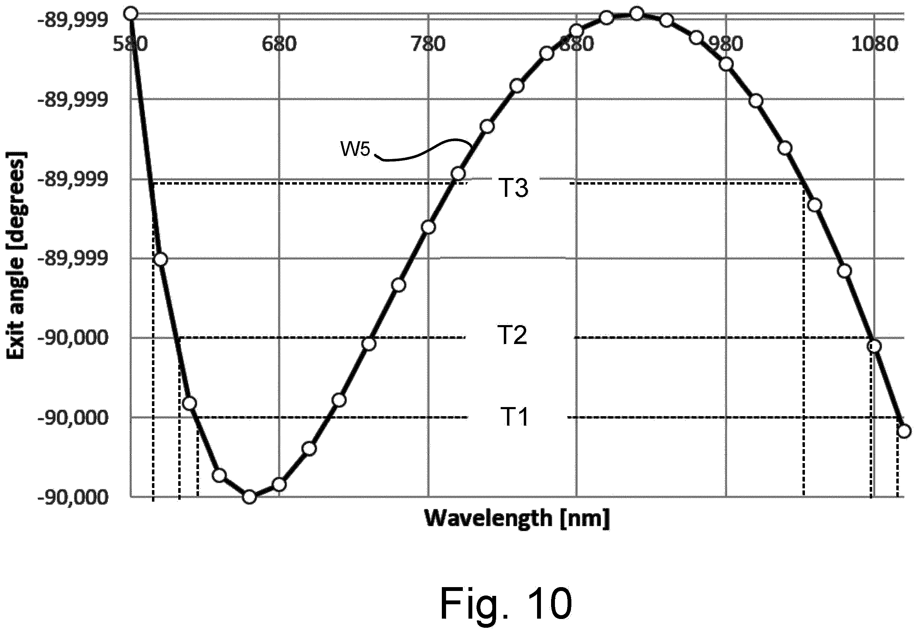

Figure 10 is a graph showing an angular characteristic W5 according to another embodiment. The angular characteristic W5 of Figure 10 is an example where not only one extremum but several extrema are present.

The angular characteristic W5 according to the embodiment of Figure 10 varies from a minimum wavelength of 580 nm to a maximum wavelength of 1100 nm. The angular characteristic W5 has a first extremum (minimum) at a first intermediate wavelength which is between 600 nm and 700 nm. Further, the angular characteristic W5 has a second extremum (maximum) at a second intermediate wavelength which is between 900 nm and 1000 nm. Accordingly, the characteristic W5 decreases from the minimum wavelength to the first intermediate wavelength and then increases from the first intermediate wavelength to the second intermediate wavelength. Finally, the angular characteristic W5 decreases from the second intermediate wavelength to the maximum wavelength.

As the angular characteristic W5 of Figure 10 has both a minimum and a maximum at the first and second intermediate wavelengths, respectively, the angular characteristic W5 provides a plurality of triples T1, T2, T3, each triple including three wavelengths having the same exit angle when being emitted from the AOTF 112 as indicated in Figure 10 by dashed lines.

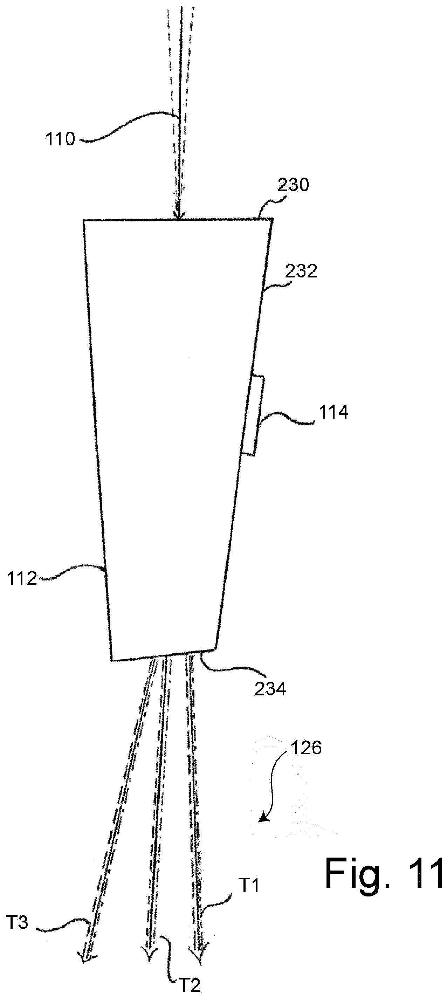

Figure 11 shows the AOTF 112 when designed to implement the angular characteristic illustrated in Figure 10. As can be seen in Figure 11, each triple T1, T2 and T3 includes three wavelengths illustrated as solid, dashed and dash-dotted lines, respectively, which are emitted from the AOTF 112 at the same exit angle. Accordingly, while there is still some angular spread among the multiple wavelengths of the output light 126 (albeit significantly reduced compared to the conventional filter design), the angular characteristic W5 ensures that the wavelengths of each group T1, T2, T3 exit from the AOTF 112 in a perfectly collinear manner.

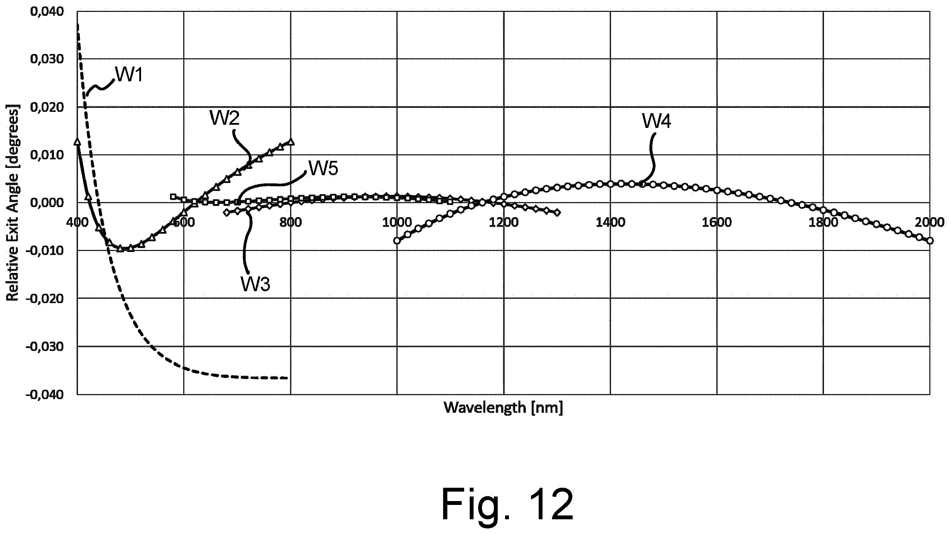

Figure 12 is a graph showing the angular characteristics W1 to W5 described above in combination. As can be seen in Figure 12, the angular characteristics W2 to W5 which are based on the new filter design deviating from the parallel-tangent condition exhibit a significantly smaller angular spread compared to the conventional filter design which satisfies the parallel-tangent condition. Further, it is evident from Figure 12 that the new filter design is suitable to cover a broad spectral bandwidth from 400 nm to 2000 nm including visible and near infrared light.

By providing pairs or triplets of wavelengths having the same exit angle it is possible to illuminate the sample 104 with two and three wavelengths, respectively, which are impinging a target region of the sample 104 perfectly collinear to each other. For this purpose, the control unit 118 may be configured to tune the AOTF 112 simultaneously to the wavelengths of one pair P1, P2, P3 or one triple T1, T2, T3 so that these wavelengths irradiate the target region of the sample 104 simultaneously. The control unit 118 may be further adapted to select one pair P1, P2, P3 or one triple T1, T2, T3 in response to a user input.

As already mentioned above with reference to Figure 1, the first and second light reflecting elements 120, 122 can be used to direct the output light 126 onto the sample 104. Thus, the first light reflecting element 120 may be actuated via the control unit 118 to deflect the respective group P1-P3, T1-T3 of different wavelengths into a predetermined target direction. This ensures that all groups P1-P3, T1-T3 propagate along the same direction towards the sample 104 despite the different exit angles at which they are emitted from the AOTF 112. When propagating along the predetermined target direction, the output light 126 may fall onto the second deflecting element 122 which is activated via the control unit 118 to deflect the output light 126 onto a predetermined target position on the sample 104. For instance, the second light reflecting element 122 may be formed from a scanning device which is configured to scan the sample 104 with the output light 126.

The memory 119 of the control unit 118 may store calibration data such as a calibration table. Based on the calibration data, the control unit 118 actuates the first light deflecting element 120 to deflect the respective group P1-P3, T1-T3 of different wavelengths into the predetermined target direction. The calibration data may represent an amount for actuating the first light deflecting elements 120 depending on the exit angle at which the respective group exits the AOTF 112.

The new filter design which enables two or three different wavelengths to be emitted from the AOTF 112 at the same exit angle can be used in applications which require multiple wavelengths be incident on the sample 104 at the same time and at the same location. One example is Coherent Anti-Stokes Raman (CARS) microscopy where two different wavelengths $\lambda 1$ and $\lambda 2$ are directed simultaneously towards the sample. The difference between inverse of the wavelengths $\lambda 1$ and $\lambda 2$ is proportional to the vibrational frequency difference:

$$\Delta \nu \left( \theta \right) \propto \frac{1}{\lambda_1 \left( \theta \right)} - \frac{1}{\lambda_2 \left( \theta \right)}$$

In the above relationship, $\Delta v$ designates the (vibrational) frequency difference, and $\theta$ designates the unique exit angle at which the wavelengths $\lambda 1$ and $\lambda 2$ are emitted from the AOTF 112.

The frequency difference corresponds to the energy of a vibrational mode in the sample under investigation. When the two wavelengths $\lambda 1$ and $\lambda 2$ impinge the sample at the same time and at the same location, a strong non-linear optical effect occurs in the sample. As a result, a new wavelength is generated at $1/(2/\lambda 1 - 1/\lambda 2)$. For efficient generation of this new wavelength, it is imperative that the two incident wavelengths strike at the same target point and along the same direction in the sample.

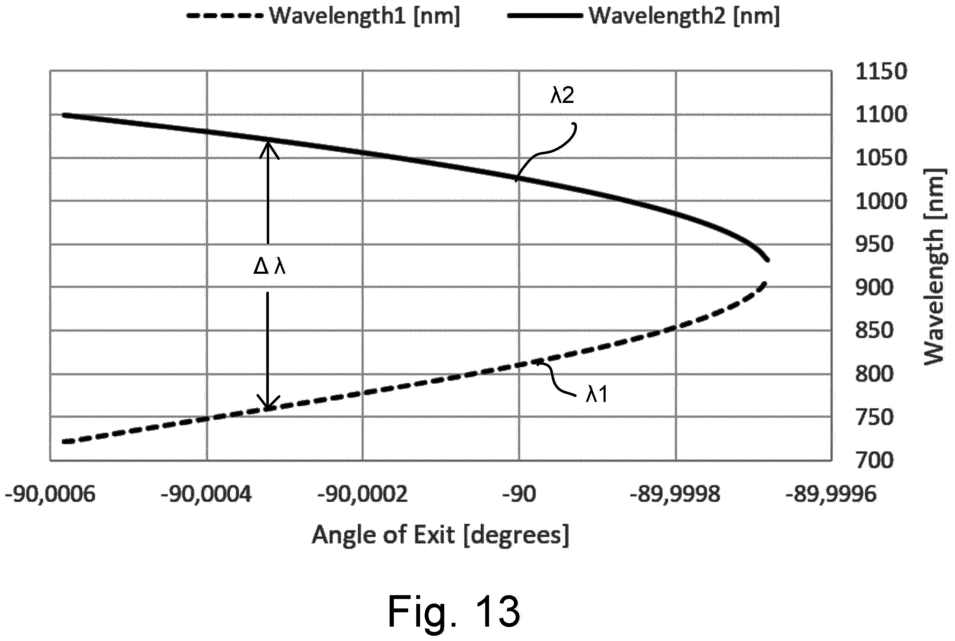

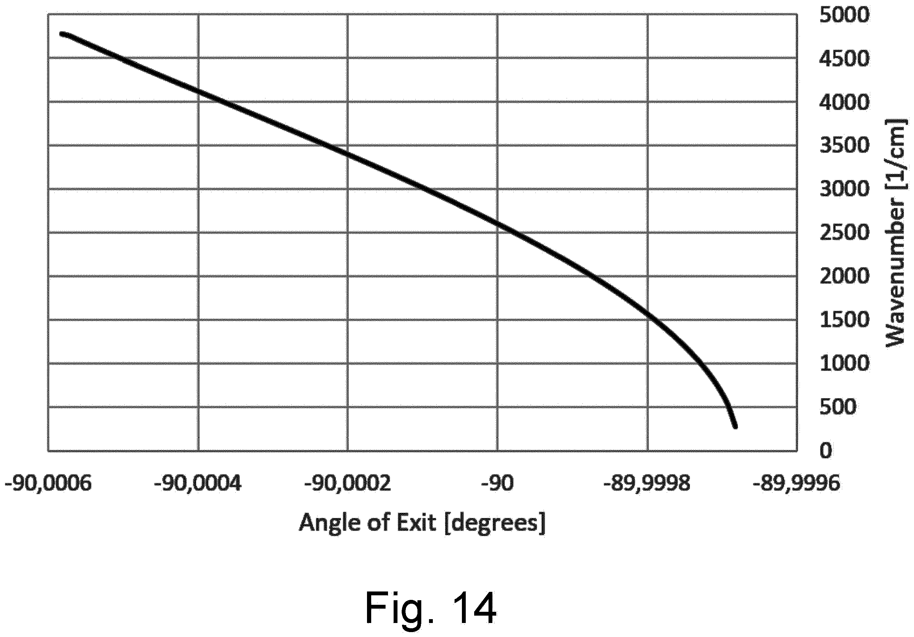

Figures 13 and 14 illustrate how a suitable difference of wavelengths $\lambda 1$ and $\lambda 2$ can be selected to match a vibrational mode to be excited in a CARS experiment. Figure 13 shows wavelengths $\lambda 1$, and $\lambda 2$ which depend on a unique exit angle at which they are emitted from the AOTF 112. The difference of the inverse wavelengths $1/\lambda 1 - 1/\lambda 2$ should match the vibrational mode to be excited which is represented in Figure 14 by a corresponding wavenumber. As can be seen in Figure 14, the vibrational mode depends on the exit angle at which the pair of wavelengths $\lambda 1$, $\lambda 2$ exit the AOTF 112. Accordingly, by selecting a suitable pair of wavelengths $\lambda 1$, $\lambda 2$ at a unique exit angle, a specific vibrational mode can be excited. The first light deflecting element 122 can then be used to redirect the pair of wavelengths at an appropriate angle towards the sample.

In order to perform an experiment as explained above with reference to Figures 13 and 14, in principle any of the angular characteristics W2 to W4 as shown in Figures 6 to 8 can be applied as these angular characteristics allow to selectively create pairs of wavelengths which are emitted from the AOTF 112 at unique exit angles. In contrast, the angular characteristic W5 of Figure 10 may be applied to perform an experiment in which it is required to illuminate the sample simultaneously with three different wavelengths $\lambda 1$, $\lambda 2$ and $\lambda 3$ at the same exit angle. An example for such an experiment can be found in the field of Stimulated Raman Scattering (SRS).

When detecting SRS signals, one often comes across a methodology which is called Frequency-Modulated Stimulated Raman Scattering (FM-SRS). For SRS signal detection, one of the two laser fields is amplitude modulated at a certain frequency. Due to the interaction with the sample, this amplitude modulation gets transferred to the laser field. The signal detection involves extracting the amplitude of this modulation transfer. In FM-SRS, instead of amplitude modulating the first laser field, a modulation of the frequency of the laser field is performed. This involves interleaving optical pulses of two different wavelengths at a certain frequency. The two wavelengths in the first laser field are chosen such that the second laser field interacts only with one of the two wavelengths in the first laser field to generate the SRS signal. The advantage of FM-SRS over the amplitude-modulated SRS version is that the intensity of the laser fields at the sample remains constant. This helps to avoid other undesired non-linear effects such as cross-phase modulation from being detected along with SRS. To perform FM-SRS, it is imperative that three different wavelengths with a predefined energy difference exit the AOTF and impinge the microscopic sample collinearly.

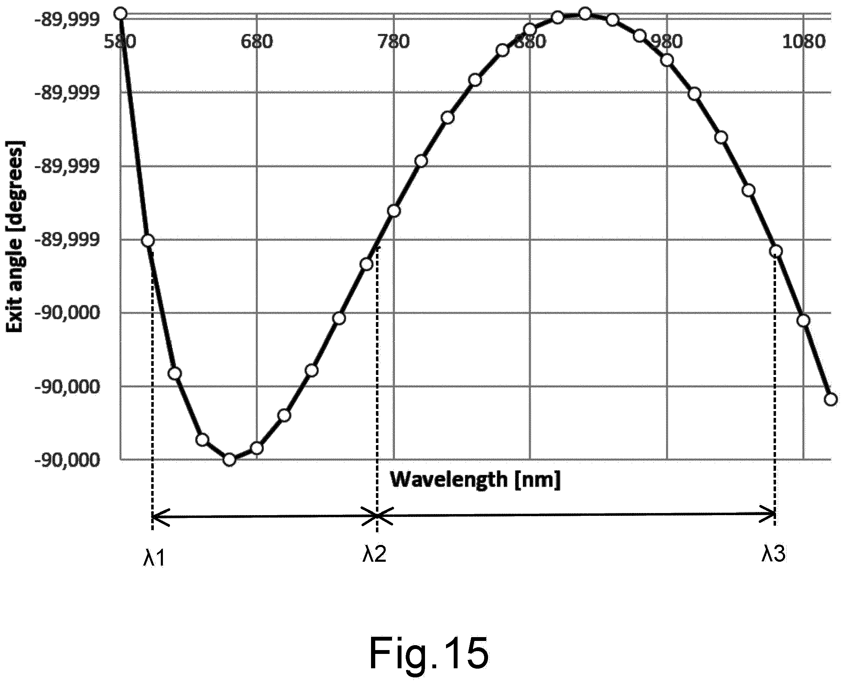

As shown in Figure 15, three wavelengths $\lambda 1$, $\lambda 2$ and $\lambda 3$ can be selected at the same exit angle $\theta$ such that the wavelengths $\lambda 1$, $\lambda 2$ and $\lambda 3$ are spaced apart by predetermined frequency differences $\Delta v_{12}$ and $\Delta v_{23}$ according to following relationships:

$$\Delta v_{12}(\theta) \propto \frac{1}{\lambda_1(\theta)} - \frac{1}{\lambda_2(\theta)}$$

$$\Delta v_{23}(\theta) \propto \frac{1}{\lambda_2(\theta)} - \frac{1}{\lambda_3(\theta)}$$

It is to be noted that the new filter design is not limited to the above applications. For instance, generating two or three output wavelengths which are emitted from the AOTF in a perfectly collinear manner may also be useful for instance in Sum-Frequency Generation (SFG) microscopy and Difference-Frequency Generation (DFG) microscopy.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

List of Reference Signs

| | |
|---|---|
| 100 | microscope |
| 102 | optical filter device |
| 104 | sample |
| 106 | microscope stage |
| 108 | light supply unit |
| 110 | input light |
| 112 | acousto-optic tunable filter |
| 114 | transducer |
| 116 | laser source |
| 118 | control unit |

| 119 | memory |
| 120 | light deflecting element |
| 122 | light deflecting element |
| 124 | illumination objective |
| 126 | output light |
| 228 | filter body |
| 230 | light entrance surface |
| 232 | transducer surface |
| 234, | light emitting surface |
| 236 | light beam |
| 238 | light beam |
| 240 | light beam |
| 312 | acousto-optic tunable filter |
| 314 | transducer |
| 328 | filter body |
| 330 | light entrance surface |
| 332 | transducer surface |
| 334 | light emission surface |
| A, A' | angular acceptance range |
| C, C' | angular spread |
| $\alpha'$, $\alpha$ | angular tolerance |
| W1-W5 | angular characteristics |
| P1-P3 | pairs of wavelengths |
| T1-T3 | triples of wavelengths |

**Claims**

1. An optical filter device (102), comprising

   an acousto-optic tunable filter (112) comprising a transducer (114) tunable with a radio frequency signal for wavelength-dependent light diffraction,
   wherein the acousto-optic tunable filter (112) has a transducer surface (232) on which the transducer (14) is attached, a light entrance surface (230) configured to receive input light (110) of a predetermined spectral bandwidth within an angular acceptance range (A), and a light emission surface (234) configured to emit diffracted output light (126) including multiple wavelengths from the spectral bandwidth at exit angles defining an angular spread (C) among the multiple wavelengths of the output light (126), and
   wherein the acousto-optic tunable filter (112) is formed in accordance with a filter design determining the angular acceptance range (A) with respect to the input light (110) and the angular spread (C) among the multiple wavelengths of the output light (126), and
   **characterized in that** the filter design deviates from a parallel-tangent condition to reduce the angular spread (C) among the multiple wavelengths of the output light (126) while limiting the angular acceptance range (A) with respect to the input light (110) over the spectral bandwidth thereof to collinear light incidence,

   wherein the angular acceptance range (A) with respect to the input light (110) is limited to $\pm$ 5 milliradians relative to a nominal direction of light incidence.

2. The optical filter device (102) according to claim 1, wherein the filter design is determined in relation to a reference filter design satisfying the parallel-tangent condition to reduce both the angular acceptance range (A) with respect to the input light (110) and the angular spread (C) among the multiple wavelengths of the output light (126) in comparison with the reference filter design.

3. The optical filter device (100) according to one of the preceding claims, wherein the filter design comprises at least one filter parameter selected from a group including an orientation of the light entrance surface (230), an orientation of the light emission surface (234), an orientation of the transducer surface (232), and a dimension of the transducer (114).

4. The optical filter device (100) according to one of the preceding claims, wherein the angular spread (C) among the multiple wavelengths of the output light (126) is determined by an angular characteristic (W2-W5) varying from a minimum wavelength to a maximum wavelength.

5. The optical filter device (102) according to claim 4, wherein the angular characteristic (W2-W5) varies from a minimum wavelength of 400 nm to a maximum wavelength of 800 nm by less than 400 microradians, and/or wherein the angular characteristic (W2-W5) varies from a minimum wavelength of 680 nm to a maximum wavelength of 1300 nm by less than 60 microradians, and/or

   wherein the angular characteristic (W2-W5) varies from a minimum wavelength of 1000 nm to a maximum wavelength of 2000 nm by less than 210 microradians, and/or
   wherein angular characteristic (W2-W5) varies from a minimum wavelength of 580 nm to a maximum wavelength of 1100 nm by less than 30 microradians.

6. The optical filter device (102) according to claims 4 or 5, wherein the angular characteristic (W2-W5) has an extremum at an intermediate wavelength between the minimum wavelength and the maximum wavelength.

7. The optical filter device (102) according to claim 6, wherein the minimum wavelength is 400 nm, the maximum wavelength is 800 nm, and the intermediate wavelength is between 450 nm to 550 nm, or

wherein the minimum wavelength is 680 nm, the maximum wavelength is 1300 nm, and the intermediate wavelength is between 880 nm to 1080 nm, or

wherein the minimum wavelength is 1000 nm, the maximum wavelength is 2000 nm, and the intermediate wavelength is between 1300 nm and 1500 nm.

8. The optical filter device (102) according to claim 6 or 7, wherein the angular characteristic (W5) has a minimum at a first intermediate wavelength and a maximum at a second intermediate wavelength, said first and second intermediate wavelengths being between the minimum wavelength and the maximum wavelength,

wherein the characteristic (W5) increases from the first intermediate wavelength towards the second intermediate wavelength and towards one of the minimum and maximum wavelengths, and

wherein the characteristic (W5) decreases from the second intermediate wavelength towards the first wavelength and towards the other of the minimum and maximum wavelengths.

9. The optical filter device (102) according to claim 8, wherein the minimum wavelength is 580 nm, the maximum wavelength is 1100 nm, the first intermediate wavelength is between 600 nm and 700 nm, and the second intermediate wavelength is between 900 nm and 1000 nm.

10. The optical filter device (100) according to one of the claims 4 to 9, wherein the minimum wavelength and the maximum wavelength define an operating range in which the acousto-optic tunable filter (114) is operated for tuning the wavelengths of the output light.

11. The optical filter device (100) according to one of the preceding claims, comprising a light supply unit (108) configured to irradiate the input light (110) over the spectral bandwidth collinearly onto the light entrance surface (230) of the acousto-optic tunable filter (112).

12. A microscope (100), in particular a confocal microscope, a multiphoton microscope, a Coherent Anti-Stokes Raman (CARS) microscope, a Stimulated Raman Scattering (SRS) microscope, a Sum-Frequency Generation (SFG) microscope, a Difference-Frequency Generation (DFG) microscope, and/or a Frequency-Modulated Stimulated Raman Scattering (FM-SRS) microscope, comprising the optical filter device (102) according to one of the preceding claims.

13. A method for manufacturing an acousto-optic tunable filter (112) comprising a transducer (114) tunable with a radio frequency signal for wavelength-dependent light diffraction, a transducer surface (232) on which the transducer (114) is attached, a light entrance surface (230) configured to receive input light (110) of a predetermined spectral bandwidth within an angular acceptance range (A), and a light emission surface (234) configured to emit diffracted output light (126) including multiple wavelengths from the spectral bandwidth at exit angles defining an angular spread (C) among the multiple wavelengths of the output light (126), the method comprising the following steps:

creating a filter design which determines the angular acceptance range (A) with respect to the input light (110) and the angular spread (C) among the multiple wavelengths of the output light (126), wherein the filter design deviates from a parallel-tangent condition to reduce the angular spread (C) among the multiple wavelengths of the output light (126) while limiting the angular acceptance range (A) with respect to the input light (110) over the spectral bandwidth thereof to $\pm$ 5 milliradians relative to a nominal direction of light incidence to cause collinear light incidence, and forming the acousto-optic tunable filter (102) in accordance with the filter design.

14. An acousto-optic tunable filter, manufactured by the method according to claim 13.

**Patentansprüche**

1. Optische Filtervorrichtung (102), umfassendein akusto-optisch abstimmbares Filter (112), umfassend einen Wandler (114), der mit einem Hochfrequenzsignal abstimmbar ist, zur wellenlängenabhängigen Lichtbeugung,

wobei das akusto-optisch abstimmbare Filter (112) eine Wandleroberfläche (232) aufweist, an der der Wandler (14) befestigt ist, eine Lichteintrittsoberfläche (230), die so konfiguriert ist, dass sie Eingangslicht (110) einer vorbestimmten spektralen Bandbreite innerhalb eines Winkelannahmebereichs (A) empfängt und eine Lichtemissionsoberfläche (234), die so konfiguriert ist, dass sie gebeugtes Ausgangslicht (126) einschließlich mehrerer Wellenlängen aus der spektralen Bandbreite in Austrittswinkeln emittiert, die eine Winkelspreizung (C) zwischen den mehreren Wellenlängen des Ausgangslichts (126) definieren, und wobei das akusto-optisch abstimmbare Filter (112) in Übereinstimmung mit einem Filterdesign ausgebildet ist, das den Winkelannahmebereich (A) in Bezug auf das Eingangslicht (110) und die Winkelspreizung (C) zwischen den mehreren Wellenlängen des Ausgangslichts (126) bestimmt, und

**dadurch gekennzeichnet, dass** das Filterdesign von einer Parallel-Tangenten-Bedingung abweicht, um die Winkelspreizung (C) zwischen den mehreren Wellenlängen des Ausgangslichts (126) zu reduzieren, während der Winkelannahmebereich (A) in Bezug auf das Eingangslicht (110) über dessen spektrale Bandbreite auf kollinearen Lichteinfall begrenzt wird, wobei der Winkelannahmebereich (A) in Bezug auf das Eingangslicht (110) auf $\pm$ 5 Milliradian relativ zu einer nominalen Lichteinfallsrichtung begrenzt ist.

2. Optische Filtervorrichtung (102) nach Anspruch 1, wobei das Filterdesign in Bezug auf ein Referenzfilterdesign bestimmt wird, das die Parallel-Tangenten-Bedingung erfüllt, um sowohl den Winkelannahmebereich (A) in Bezug auf das Eingangslicht (110) als auch die Winkelspreizung (C) zwischen den mehreren Wellenlängen des Ausgangslichts (126) im Vergleich zu dem Referenzfilterdesign zu reduzieren.

3. Optische Filtervorrichtung (100) nach einem der vorstehenden Ansprüche, wobei das Filterdesign mindestens einen Filterparameter umfasst, der aus einer Gruppe ausgewählt ist, die eine Orientierung der Lichteintrittsoberfläche (230), eine Orientierung der Lichtemissionsoberfläche (234), eine Orientierung der Wandleroberfläche (232) und eine Dimension des Wandlers (114) einschließt.

4. Optische Filtervorrichtung (100) nach einem der vorstehenden Ansprüche, wobei die Winkelspreizung (C) zwischen den mehreren Wellenlängen des Ausgangslichts (126) durch eine Winkelcharakteristik (W2-W5) bestimmt wird, die von einer minimalen Wellenlänge zu einer maximalen Wellenlänge variiert.

5. Optische Filtervorrichtung (102) nach Anspruch 4, wobei die Winkelcharakteristik (W2-W5) von einer minimalen Wellenlänge von 400 nm zu einer maximalen Wellenlänge von 800 nm um weniger als 400 Mikroradian variiert, und/oder wobei die Winkelcharakteristik (W2-W5) von einer minimalen Wellenlänge von 680 nm zu einer maximalen Wellenlänge von 1300 nm um weniger als 60 Mikroradian variiert, und/oder

wobei die Winkelcharakteristik (W2-W5) von einer minimalen Wellenlänge von 1000 nm bis zu einer maximalen Wellenlänge von 2000 nm um weniger als 210 Mikroradian variiert, und/oder

wobei die Winkelcharakteristik (W2-W5) von einer minimalen Wellenlänge von 580 nm bis zu einer maximalen Wellenlänge von 1100 nm um weniger als 30 Mikroradian variiert.

6. Optische Filtervorrichtung (102) nach Anspruch 4 oder 5, wobei die Winkelcharakteristik (W2-W5) ein Extremum bei einer Zwischenwellenlänge zwischen der minimalen Wellenlänge und der maximalen Wellenlänge aufweist.

7. Optische Filtervorrichtung (102) nach Anspruch 6, wobei die minimale Wellenlänge 400 nm ist, die maximale Wellenlänge 800 nm ist und die Zwischenwellenlänge zwischen 450 nm und 550 nm liegt, oder wobei die minimale Wellenlänge 680 nm beträgt, die maximale Wellenlänge 1300 nm beträgt und die Zwischenwellenlänge zwischen 880 nm und 1080 nm liegt, oder wobei die minimale Wellenlänge 1000 nm beträgt, die maximale Wellenlänge 2000 nm beträgt und die Zwischenwellenlänge zwischen 1300 nm und 1500 nm liegt.

8. Optische Filtervorrichtung (102) nach Anspruch 6 oder 7, wobei die Winkelcharakteristik (W5) ein Minimum bei einer ersten Zwischenwellenlänge und ein Maximum bei einer zweiten Zwischenwellenlänge aufweist, wobei die erste und zweite Zwischenwellenlänge zwischen der minimalen Wellenlänge und der maximalen Wellenlänge liegen,

wobei die Charakteristik (W5) von der ersten Zwischenwellenlänge zu der zweiten Zwischenwellenlänge und zu einer von den minimalen und maximalen Wellenlängen hin zunimmt, und wobei die Charakteristik (W5) von der zweiten Zwischenwellenlänge zu der ersten Wellenlänge und zu der anderen von den minimalen und maximalen Wellenlängen hin abnimmt.

9. Optische Filtervorrichtung (102) nach Anspruch 8, wobei die minimale Wellenlänge 580 nm beträgt, die maximale Wellenlänge 1100 nm beträgt, die erste Zwischenwellenlänge zwischen 600 nm und 700 nm liegt und die zweite Zwischenwellenlänge zwischen 900 nm und 1000 nm liegt.

10. Optische Filtervorrichtung (100) nach einem der Ansprüche 4 bis 9, wobei die minimale Wellenlänge und die maximale Wellenlänge einen Betriebsbereich definieren, in dem das akusto-optisch abstimmbare Filter (114) zur Abstimmung der Wellenlängen des Ausgangslichts betrieben wird.

11. Optische Filtervorrichtung (100) nach einem der vorstehenden Ansprüche, umfassend eine Lichtversorgungseinheit (108), die so konfiguriert ist, dass sie das Eingangslicht (110) über die spektrale Bandbreite kollinear auf die Lichteintrittsoberfläche (230) des akusto-optisch abstimmbaren Filters (112) einstrahlt.

12. Mikroskop (100), insbesondere ein konfokales Mikroskop, ein Multiphotonenmikroskop, ein kohärente Anti-Stokes-Raman- (CARS) Mikroskop, ein Stimulierte Raman-Streuungs- (SRS) Mikroskop, ein Summen-Frequenz-Erzeugungs- (SFG) Mikroskop, ein Differenz-Frequenz-Erzeugungs- (DFG) Mikroskop und/oder ein Frequenzmodulierte Stimulierte Raman-Streuungs- (FM-SRS) Mikroskop, umfassend die optische Filtervorrichtung (102) nach einem der vorstehenden Ansprüche.

13. Verfahren zur Herstellung eines akusto-optisch abstimmbaren Filters (112), umfassend einen mit einem Hochfrequenzsignal abstimmbaren Wandler (114) zur wellenlängenabhängigen Lichtbeugung, eine Wandleroberfläche (232), auf der der Wandler (114) befestigt ist, eine Lichteintrittsoberfläche (230), die so konfiguriert ist, dass sie Eingangslicht (110) einer vorbestimmten spektralen Bandbreite innerhalb eines Winkelannahmebereichs (A) empfängt, und eine Lichtemissionsoberfläche (234), die so konfiguriert ist, dass sie gebeugtes Ausgangslicht (126) einschließlich mehrerer Wellenlängen aus der spektralen Bandbreite in Ausgangswinkeln emittiert, die eine Winkelspreizung (C) zwischen den mehreren Wellenlängen des Ausgangslichts (126) definieren,

wobei das Verfahren die folgenden Schritte umfasst:

Erzeugen eines Filterdesigns, das den Winkelannahmebereich (A) in Bezug auf das Eingangslicht (110) und die Winkelspreizung (C) zwischen den mehreren Wellenlängen des Ausgangslichts (126) bestimmt, wobei das Filterdesign von einer Parallel-Tangenten-Bedingung abweicht, um die Winkelspreizung (C) zwischen den mehreren Wellenlängen des Ausgangslichts (126) zu reduzieren, während der Winkelannahmebereich (A) in Bezug auf das Eingangslicht (110) über dessen spektrale Bandbreite auf $\pm$ 5 Milliradian relativ zu einer nominalen Lichteinfallsrichtung begrenzt wird, um einen kollinearen Lichteinfall zu bewirken, und

Ausbilden des akusto-optisch abstimmbaren Filters (102) in Übereinstimmung mit dem Filterdesign.

14. Akusto-optisch abstimmbares Filter, hergestellt nach dem Verfahren gemäß Anspruch 13.

**Revendications**

1. Dispositif de filtre optique (102), comprenant

un filtre acousto-optique accordable (112) comprenant un transducteur (114) accordable avec un signal radiofréquence pour une diffraction de lumière dépendant de la longueur d'onde,
dans lequel le filtre acousto-optique accordable (112) présente une surface de transducteur (232) sur laquelle le transducteur (14) est fixé, une surface d'entrée de lumière (230) configurée pour recevoir une lumière d'entrée (110) d'une bande passante spectrale prédéterminée dans une plage d'acceptation angulaire (A), et une surface d'émission de lumière (234) configurée pour émettre une lumière de sortie diffractée (126) incluant de multiples longueurs d'onde à partir de la bande passante spectrale à des angles de sortie définissant une propagation angulaire (C) parmi les multiples longueurs d'onde de la lumière de sortie (126), et
dans lequel le filtre acousto-optique accordable (112) est formé conformément à une conception de filtre déterminant la plage d'acceptation angulaire (A) par rapport à la lumière d'entrée (110) et la propagation angulaire (C) parmi les multiples longueurs d'onde de la lumière de sortie (126), et
**caractérisé en ce que** la conception de filtre s'écarte d'une condition parallèle-tangente pour réduire la propagation angulaire (C) parmi les multiples longueurs d'onde de la lumière de sortie (126) tout en limitant la plage d'acceptation angulaire (A) par rapport à la lumière d'entrée (110) sur sa bande passante spectrale à l'incidence de lumière colinéaire,
dans lequel la plage d'acceptation angulaire (A) par rapport à la lumière d'entrée (110) est limitée à $\pm$ 5 milliradians par rapport à une direction nominale d'incidence de lumière.

2. Dispositif de filtre optique (102) selon la revendication 1, dans lequel la conception de filtre est déterminée par rapport à une conception de filtre de référence satisfaisant à la condition parallèle-tangente pour réduire à la fois la plage d'acceptation angulaire (A) par rapport à la lumière d'entrée (110) et la propagation angulaire (C) parmi les multiples longueurs d'onde de la lumière de sortie (126) par rapport à la conception de filtre de référence.

3. Dispositif de filtre optique (100) selon l'une des revendications précédentes, dans lequel la conception de filtre comprend au moins un paramètre de filtre choisi dans un groupe incluant une orientation de la surface d'entrée de lumière (230), une orientation de la surface d'émission de lumière (234), une orientation de la surface de transducteur (232) et une dimension du transducteur (114).

4. Dispositif de filtre optique (100) selon l'une des revendications précédentes, dans lequel la propagation angulaire (C) parmi les multiples longueurs d'onde de la lumière de sortie (126) est déterminée par une caractéristique angulaire (W2-W5) variant d'une longueur d'onde minimale à une longueur d'onde maximale.

5. Dispositif de filtre optique (102) selon la revendication 4, dans lequel la caractéristique angulaire (W2-W5) varie d'une longueur d'onde minimale de 400 nm à une longueur d'onde maximale de 800 nm de moins de 400 microradians, et/ou dans lequel la caractéristique angulaire (W2-W5) varie d'une longueur d'onde minimale de 680 nm à une longueur d'onde maximale de 1300 nm de moins de 60 microradians, et/ou

dans lequel la caractéristique angulaire (W2-W5) varie d'une longueur d'onde minimale de 1000 nm à une longueur d'onde maximale de 2000 nm de moins de 210 microradians, et/ou dans lequel la caractéristique angulaire (W2-W5) varie d'une longueur d'onde minimale de 580 nm à une longueur d'onde maximale de 1100 nm de moins de 30 microradians.

6. Dispositif de filtre optique (102) selon la revendication 4 ou 5, dans lequel la caractéristique angulaire (W2-W5) présente un extrême à une longueur d'onde intermédiaire entre la longueur d'onde minimale et la longueur d'onde maximale.

7. Dispositif de filtre optique (102) selon la revendication 6, dans lequel la longueur d'onde minimale est de 400 nm, la longueur d'onde maximale est de 800 nm, et la longueur d'onde intermédiaire est comprise entre 450 nm et 550 nm, ou dans lequel la longueur d'onde minimale est de 680 nm, la longueur d'onde maximale est de 1300 nm, et la longueur d'onde intermédiaire est comprise entre 880 nm et 1080 nm, ou dans lequel la longueur d'onde minimale est de 1000 nm, la longueur d'onde maximale est de 2000 nm et la longueur d'onde intermédiaire est comprise entre 1300 nm et 1500 nm.

8. Dispositif de filtre optique (102) selon la revendication 6 ou 7, dans lequel la caractéristique angulaire (W5) présente un minimum à une première longueur d'onde intermédiaire et un maximum à une seconde longueur d'onde intermédiaire, lesdites première et seconde longueurs d'onde intermédiaires étant comprises entre la longueur d'onde minimale et la longueur d'onde maximale,

dans lequel la caractéristique (W5) augmente à partir de la première longueur d'onde intermédiaire vers la seconde longueur d'onde intermédiaire et vers l'une des longueurs d'onde minimale et maximale, et
dans lequel la caractéristique (W5) diminue à partir de la seconde longueur d'onde intermédiaire vers la première longueur d'onde et vers l'autre des longueurs d'onde minimale et maximale.

9. Dispositif de filtre optique (102) selon la revendication 8, dans lequel la longueur d'onde minimale est de 580 nm, la longueur d'onde maximale est de 1100 nm, la première longueur d'onde intermédiaire est comprise entre 600 nm et 700 nm, et la seconde longueur d'onde intermédiaire est comprise entre 900 nm et 1000 nm.

10. Dispositif de filtre optique (100) selon l'une des revendications 4 à 9, dans lequel la longueur d'onde minimale et la longueur d'onde maximale définissent une plage de fonctionnement dans laquelle le filtre acousto-optique accordable (114) est utilisé pour accorder les longueurs d'onde de la lumière de sortie.

11. Dispositif de filtre optique (100) selon l'une des revendications précédentes, comprenant une unité d'alimentation en lumière (108) configurée pour irradier la lumière d'entrée (110) sur la bande passante spectrale de manière colinéaire sur la surface d'entrée de lumière (230) du filtre acousto-optique accordable (112).

12. Microscope (100), en particulier un microscope confocal, un microscope multiphoton, un microscope à diffusion Raman Anti-Stokes cohérente (CARS), un microscope à diffusion Raman stimulée (SRS), un microscope à génération de fréquence-somme (SFG), un microscope à génération de fréquence-différence (DFG) et/ou un microscope à diffusion Raman stimulée à modulation de fréquence (FM-SRS), comprenant le dispositif de filtre optique (102) selon l'une des revendications précédentes.

13. Procédé de fabrication d'un filtre acousto-optique accordable (112) comprenant un transducteur (114) accordable avec un signal radiofréquence pour une diffraction de lumière dépendant de la longueur d'onde, une surface de transducteur (232) sur laquelle le transducteur (114) est fixé, une surface d'entrée de lumière (230) configurée pour recevoir une lumière d'entrée (110) d'une bande passante spectrale prédéterminée dans une plage d'acceptation angulaire (A), et une surface d'émission de lumière (234) configurée pour émettre une lumière de sortie diffractée (126) incluant de multiples longueurs d'onde à partir de la bande passante spectrale à des angles de sortie définissant une propagation angulaire (C) parmi les multiples longueurs d'onde de la lumière de sortie (126),

le procédé comprenant les étapes suivantes :

la création d'une conception de filtre qui détermine la plage d'acceptation angulaire (A) par rapport à la lumière d'entrée (110) et la propagation angulaire (C) parmi les multiples longueurs d'onde de la lumière de sortie (126), dans lequel la conception de filtre s'écarte d'une condition parallèle-tangente pour réduire la propagation angulaire (C) parmi les multiples longueurs d'onde de la lumière de sortie (126) tout en limitant la plage d'acceptation angulaire (A) par rapport à la lumière d'entrée (110) sur sa bande passante spectrale à $\pm$ 5 milliradians par rapport à une direction nominale d'incidence de lumière pour provoquer une incidence de lumière colinéaire, et la formation du filtre acousto-optique accordable (102) conformément à la conception de filtre.

14. Filtre acousto-optique accordable, fabriqué selon le procédé selon la revendication 13.

100

108

116

102

110

114

112

126

119

120

118

122

104

124

106

# Fig. 1

Fig. 2

Fig. 3

Fig. 4

EP 4 145 218 B1

Fig. 5

Fig. 6

Fig. 7

Fig. 8

Fig. 9

Fig. 10

Fig. 11

Fig. 12

Fig. 13

EP 4 145 218 B1

Fig. 14

Fig.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016223882 A1
- US 2016209270 A1
- US 5463493 A

**Non-patent literature cited in the description**

- **J.D. WARD et al.** Acousto-optic devices for operation with 2μm fibre lasers. *Proc. of SPIE*, 2015, vol. 9730
- **I. C. CHANG**. Noncollinear acousto-optic filter with large angular aperture. *Appl. Phys. Lett.*, 1974, vol. 25, 370
- **ISOMET**. *Acousto Opttic Tunable Filters / Basic Theory And Design Considerations* (8)